# EUROPÄISCHE PATENTANMELDUNG

(11) **EP 1 106 491 A2**
(43) Veröffentlichungstag der Anmeldung: **13.06.2001**
(21) Anmeldenummer: 00125462.2
(22) Anmeldetag: 21.11.2000
(51) Int. Cl.: B62D 65/00

(54) **Kabine zur Oberflächenbehandlung von Fahrzeugkarosserien**

(30) Priorität: 30.11.1999 DE 19957607
(71) Anmelder: Dürr Systems GmbH, 70435 Stuttgart (DE)
(72) Erfinder: Walter, Günter, 71696 Möglingen (DE); Kisi, Hidayet, 74074 Heilbronn (DE)
(74) Vertreter: Hoeger, Stellrecht & Partner

(57) **Zusammenfassung**

Um eine Kabine zur Oberflächenbehandlung von Fahrzeugkarosserien (124), umfassend einen Tunnel (104), eine Fördervorrichtung (118) zum Fördern der Fahrzeugkarosserien durch den Tunnel hindurch, welche eine Antriebseinheit (238) und eine Umlenkeinheit (334) für ein Fördermittel der Fördervorrichtung umfaßt, einen Antriebsturm (116), an welchem die Antriebseinheit gehalten ist, und einen Umlenkturm (106), an welchem die Umlenkeinheit gehalten ist, zu schaffen, welche unter geringem Materialeinsatz herstellbar und einfach montierbar ist, wird vorgeschlagen, daß der Antriebsturm und/oder der Umlenkturm jeweils ein selbsttragendes Gehäuse umfassen, an welchem die Antriebseinheit bzw. die Umlenkeinheit der Fördervorrichtung gehalten ist.

## Beschreibung

Die vorliegende Erfindung betrifft eine Kabine zur Oberflächenbehandlung von Fahrzeugkarosserien, die einen Tunnel, eine Fördervorrichtung zum Fördern der Fahrzeugkarosserien durch den Tunnel hindurch, welche eine Antriebseinheit und eine Umlenkeinheit für ein Fördermittel der Fördervorrichtung umfaßt, einen Antriebsturm, an welchem die Antriebseinheit gehalten ist, und einen Umlenkturm, an welchem die Umlenkeinheit gehalten ist, umfaßt.

Solche Kabinen zur Oberflächenbehandlung von Fahrzeugkarosserien sind aus dem Stand der Technik bekannt.

Insbesondere sind solche Kabinen bekannt, bei denen der Antriebsturm und der Umlenkturm jeweils als freistehende, nicht an dem Tunnel der Kabine festgelegte Profilstahlkonstruktionen, beispielsweise aus Rechteckrohren, ausgebildet sind.

Solche bekannten Antriebs- oder Umlenktürme erfordern eine aufwendige Bodenverankerung. Außerdem müssen zusätzliche innere und äußere Blechverkleidungen der Profilstahlkonstruktion vorgesehen werden, um die Profilstahlkonstruktion nach innen vor korrosionsfördernden Dämpfen aus dem Tunnel der Kabine zu schützen und um nach außen eine weniger zerklüftete, leichter zu reinigende Oberfläche bereitzustellen. Gleichwohl läßt sich bei diesen Profilstahlkonstruktionen nicht vermeiden, daß Teile derselben mit Dämpfen aus dem Tunnel der Kabine in Kontakt kommen, so daß ein aufwendiger Korrosionsschutz der betreffenden Teile der jeweiligen Profilstahlkonstruktion erforderlich ist.

Der vorliegenden Erfindung liegt daher die Aufgabe zugrunde, eine Kabine zur Oberflächenbehandlung von Fahrzeugkarosserien der eingangs genannten Art schaffen, welche unter geringem Materialeinsatz herstellbar und einfach montierbar ist.

Diese Aufgabe wird bei einer Kabine mit den Merkmalen des Oberbegriffs von Anspruch 1 erfindungsgemäß dadurch gelöst, daß der Antriebsturm und/oder der Umlenkturm jeweils ein selbsttragendes Gehäuse umfassen, an welchem die Antriebseinheit bzw. die Umlenkeinheit der Fördervorrichtung gehalten ist.

Bei dem erfindungsgemäßen Konzept werden also die Antriebseinheit und/oder die Umlenkeinheit der Fördervorrichtung nicht an eine aufwendige und zerklüftete Profilstahlkonstruktion montiert, welche ihrerseits nach innen und nach außen verkleidet und durch zusätzliche Verblendungen an den Tunnel der Kabine angeschlossen werden muß. Vielmehr sind die Antriebseinheit und/oder Umlenkeinheit an einem selbsttragenden Gehäuse gehalten, welches keiner weiteren Verkleidung bedarf, so daß eine erhebliche Materialeinsparung erzielt wird.

Da das selbsttragende Gehäuse überdies wesentlich leichter ist als die herkömmliche Profilstahlkonstruktion, kann die Bodenverankerung des Antriebsturms bzw. des Umlenkturms weniger aufwendig gehalten werden.

Das selbsttragende Gehäuse der erfindungsgemäßen Kabine kann als fertig vormontiertes Modul an den Montageort der Kabine angeliefert werden, was die erforderliche Montagezeit gegenüber einer aus Einzelelementen vor Ort aufzubauenden Profilstahlkonstruktion erheblich verringert.

Bei einer bevorzugten Ausgestaltung der erfindungsgemäßen Kabine ist vorgesehen, daß das Gehäuse im wesentlichen dieselbe Gesamtbreite wie der Tunnel aufweist, im Gegensatz zu den herkömmlichen Profilrahmenkonstruktionen, welche zu beiden Seiten deutlich über die Seitenwände des Tunnels der Kabine hinausragen müssen, da die lichte Weite der Innenverkleidung der Profilstahlkonstruktion zumindest der lichten Weite des Tunnels entsprechen muß, die Profile der Profilstahlkonstruktion aber eine wesentlich größere Breite aufweisen als die Seitenwände des Tunnels.

Ferner ist es günstig, wenn das Gehäuse im wesentlichen dieselbe lichte Weite wie der Tunnel der Kabine aufweist.

Besonders günstig ist es, wenn sich das Gehäuse unmittelbar an den Tunnel anschließt, da so zusätzliche Verblendungen zwischen dem Gehäuse und dem Tunnel entfallen können.

An den Stellen, an welchen die Seitenwände des Tunnels einerseits und des Gehäuses andererseits aneinanderstoßen, können der Tunnel und das Gehäuse in einfacher Weise durch eine Schraub- oder durch eine Schweißverbindung miteinander verbunden werden.

Um eine vorgegebene Höhe der Bahn der Fahrzeugkarosserien über einem Untergrund der Kabine einhalten zu können, wird das Gehäuse vorteilhafterweise von einer Stützkonstruktion aus vertikalen Stützpfeilern getragen.

Diese Stützpfeiler können insbesondere als Profilstahlelemente, vorzugsweise als Profilstahlelemente mit Doppel-T-Querschnitt, ausgebildet sein.

Eine besonders stabile Konstruktion wird erzielt, wenn vorgesehen ist, daß die Stützkonstruktion einen im wesentlichen horizontalen Basisrahmen umfaßt, welcher das Gehäuse trägt.

Zum Auffangen von Naßmedium, das von den durch die Kabine zu transportierenden Fahrzeugkarosserien abtropft, umfaßt das Gehäuse vorteilhafterweise eine in dasselbe integrierte Bodenwanne.

Eine solche integrierte Bodenwanne kann insbesondere ein zu dem Tunnel der Kabine hin gerichtetes Gefälle aufweisen, um das in der Bodenwanne gesammelte Naßmedium in dem Tunnel abzuleiten.

Ein besonders einfacher und leicht zu montierender Aufbau des Gehäuses wird dadurch erzielt, daß das Gehäuse Seitenwände umfaßt, welche Blechpaneele umfassen.

Zur Erhöhung der Tragfähigkeit der Seitenwände können dieselben ferner Trageprofile umfassen, welche eine größere Materialstärke als die Blechpaneele aufweisen.

Beispielsweise können die Trageprofile aus 5 mm starkem Blech und die Blechpaneele aus 3 mm starkem Blech hergestellt sein.

Um die Tragfähigkeit des selbsttragenden Gehäuses besonders wirksam zu erhöhen, werden die Trageprofile vorteilhafterweise im wesentlichen vertikal ausgerichtet.

Außer der Antriebseinheit oder der Umlenkeinheit können noch weitere Bestandteile der Fördervorrichtung an dem selbsttragenden Gehäuse angeordnet sein.

So kann beispielsweise vorgesehen sein, daß an der Innenseite des Gehäuses mindestens eine Klemmschiene zum Anklemmen eines Fördermittelführungsbahnabschnittes, insbesondere eines Kettenführungsbahnabschnittes, festgelegt ist.

Ferner kann vorgesehen sein, daß an der Innenseite des Gehäuses mindestens ein Verstärkungsprofil zum Versteifen des Gehäuses angeordnet ist.

Um die Temperatur an der Außenseite des Gehäuses im Betrieb der Kabine nicht zu stark ansteigen zu lassen, sind die Begrenzungswände des Gehäuses vorteilhafterweise mit einer Wärmeisolation versehen, welche beispielsweise aus Steinwollmatten gebildet sein kann.

Ferner ist es günstig, wenn an der Innenseite des Gehäuses mindestens eine Klemmschiene zum Anklemmen von Einbauten, insbesondere von Sensoren, angeordnet ist.

Bei einer bevorzugten Ausgestaltung der Erfindung ist vorgesehen, daß das selbsttragende Gehäuse die Antriebseinheit der Fördervorrichtung trägt.

Vorteilhafterweise umfaßt die Antriebseinheit einen Halterahmen, welcher von dem Gehäuse getragen ist und an welchem alle übrigen Bestandteile der Antriebseinheit mittelbar oder unmittelbar gehalten sind. Dadurch bildet die Antriebseinheit einschließlich des Halterahmens ein Modul, welches fertig vormontiert an den Montageort der Kabine angeliefert und auf das selbsttragende Gehäuse aufgesetzt werden kann.

Insbesondere kann vorgesehen sein, daß der Halterahmen, vorzugsweise mittels einer Schraubverbindung, lösbar an dem Gehäuse festgelegt ist.

Für Inspektions- und Reinigungszwecke ist es günstig, wenn das Gehäuse eine begehbare Deckenwand umfaßt.

Schließt sich an das selbsttragende Gehäuse eine Luftschleuse an, so ist es günstig, wenn die Seitenwände und eine Deckenwand des Gehäuses zusammen eine Absaughaube für diese Luftschleuse bilden, so daß auf eine separate Absaughaube für die Luftschleuse verzichtet werden kann.

Weitere Merkmale und Vorteile der Erfindung sind Gegenstand der nachfolgenden Beschreibung und zeichnerischen Darstellung eines Ausführungsbeispiels.

In den Zeichnungen zeigen:
- Fig. 1: eine Seitenansicht einer Kabine zur Oberflächenbehandlung von Fahrzeugkarosserien;
- Fig. 2: eine Draufsicht auf die Kabine aus Fig. 1;
- Fig. 3: einen Schnitt durch einen Tunnel der Kabine aus Fig. 1 längs der Linie 3-3 in Fig. 1, mit einer durch den Tunnel geförderten Fahrzeugkarosserie;
- Fig. 4: einen der Fig. 3 entsprechenden Querschnitt durch den Tunnel, mit einem durch den Tunnel bewegten Inspektionswagen;
- Fig. 5: eine vergrößerte Darstellung des in Fig. 3 mit I gekennzeichneten Bereichs;
- Fig. 6: einen Querschnitt durch den Tunnel der Kabine aus Fig. 1 längs der Linie 6-6 in Fig. 1;
- Fig. 7: eine Seitenansicht eines Antriebsturms der Kabine aus Fig. 1;
- Fig. 8: eine schematische Draufsicht auf den Antriebsturm der Kabine;
- Fig. 9: einen horizontalen Schnitt durch den Antriebsturm der Kabine in dem in Fig. 8 mit II gekennzeichneten Bereich längs der Linie 9-9 in Fig. 7;
- Fig. 10: einen Querschnitt durch den Antriebsturm der Kabine längs der Linie 10-10 in Fig. 1 oder Fig. 7;
- Fig. 11: einen vergrößerten Ausschnitt aus Fig. 10, welcher Details einer Antriebseinheit einer Fördervorrichtung der Kabine darstellt;
- Fig. 12: eine Seitenansicht eines Umlenkturms der Kabine aus Fig. 1;
- Fig. 13: eine Draufsicht auf den Umlenkturm der Kabine;
- Fig. 14: einen horizontalen Schnitt durch einen Teilbereich des Umlenkturms längs der Linie 14-14 in Fig. 12; und
- Fig. 15: einen Querschnitt durch den Umlenkturm der Kabine längs der Linie 15-15 in Fig. 12.

Gleiche oder funktional äquivalente Elemente sind in allen Figuren mit denselben Bezugszeichen bezeichnet.

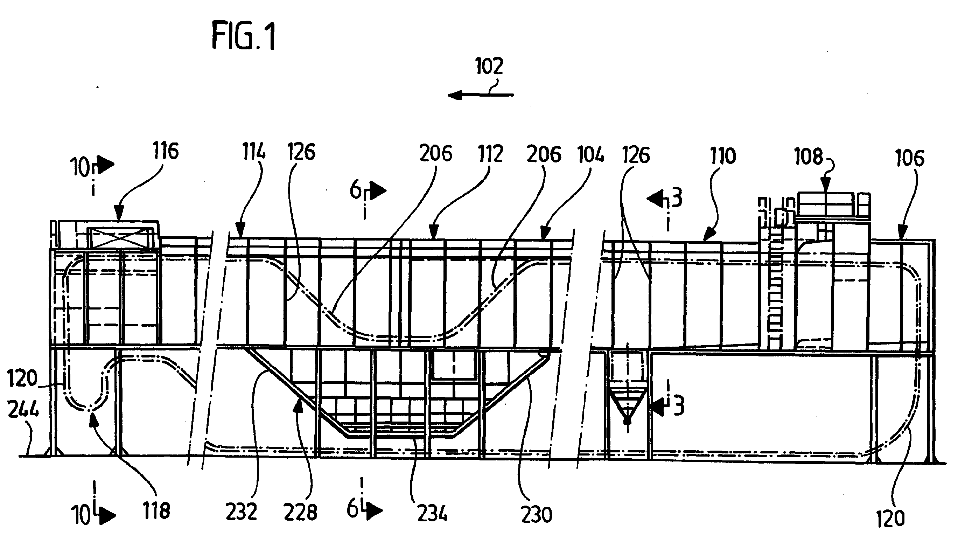

Eine in den Fig. 1 bis 15 dargestellte, als Ganzes mit 100 bezeichnete Kabine zur Oberflächenbehandlung von Fahrzeugkarosserien umfaßt einen sich längs einer Durchlaufrichtung 102 der Fahrzeugkarosserien erstreckenden Tunnel 104, einen eingangsseitig angeordneten Umlenkturm 106 und einen ausgangsseitigen Antriebsturm 116.

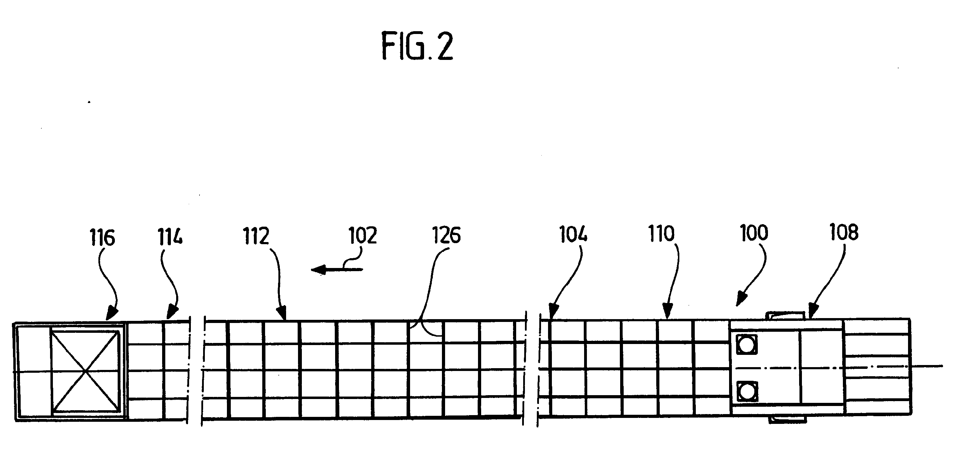

Wie am besten aus den Figuren 1 und 2 zu ersehen ist, umfaßt der Tunnel 104 die folgenden, längs der Durchlaufrichtung 102 aufeinanderfolgenden Bestandteile: eine Luftschleuse 108, einen Vorbehandlungsbereich 110, einen Tauchbereich 112 und einen Nachbehandlungsbereich 114.

Zum Hindurchfördern der Fahrzeugkarosserien durch die genannten Bereiche der Kabine 100 umfaßt dieselbe eine als Ganzes mit 118 bezeichnete Fördervorrichtung, welche ein lineares, endlos geschlossenes Fördermittel 120 umfaßt, dessen Verlauf in Fig. 1 schematisch in strichpunktierten Linien eingetragen ist.

Das Fördermittel 120 ist bei der hier beschriebenen Ausführungsform der Kabine 100 zweisträngig ausgebildet, wobei jeder Strang des Fördermittels 120 durch je eine Förderkette 122 gebildet ist.

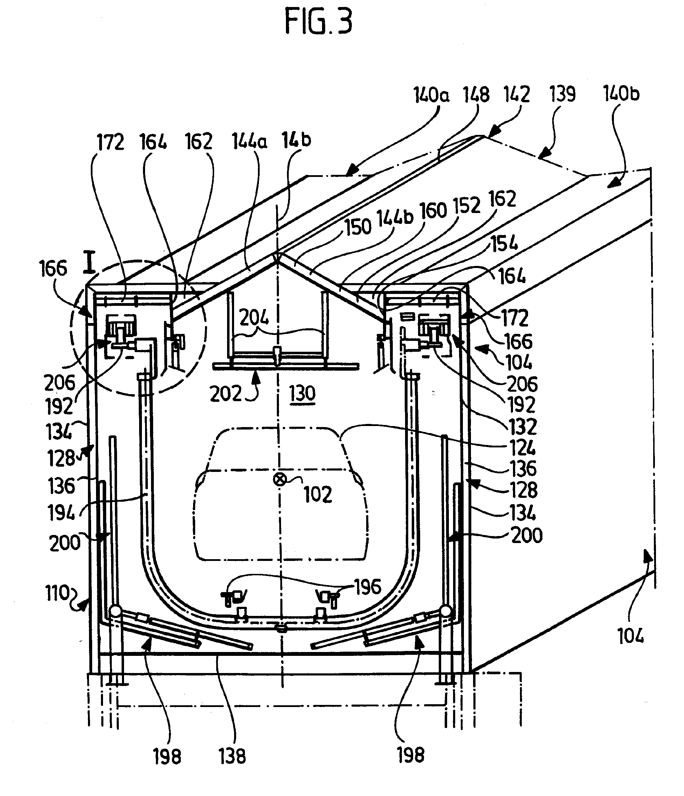

Die Fördervorrichtung 118 der hier beschriebenen Ausführungsform der Kabine 100 ist als Pendelförderer ausgebildet, wie aus den Figuren 3 bis 5 zu ersehen ist.

Die Fig. 3 zeigt einen Querschnitt durch den Tunnel 104 in dem Vorbehandlungsbereich 110, wobei sich gerade eine Fahrzeugkarosserie 124 im Bereich der Schnittebene befindet.

Der Tunnel 104 umfaßt vertikale Stützträger 126 (siehe Fig. 1 und 2), zwischen denen sich ebene, vertikale Seitenwände 128 erstrecken (siehe Fig. 3). Die dem Innenraum 130 des Tunnels 104 zugewandten Innenseiten der Seitenwände 128 sind durch an den Rändern abgekantete Blechpaneele mit einer Materialstärke von beispielsweise 3 mm gebildet. Die Außenseiten der Seitenwände 128 sind beispielsweise durch Trapezbleche 134 gebildet. Der Zwischenraum zwischen den Blechpaneelen 132 und den Trapezblechen 134 ist mit einer Wärmeisolation 136 ausgefüllt, welche beispielsweise Steinwollmatten umfassen kann.

Der Boden des Tunnels 104 ist durch ein Bodenblech 138 gebildet, welches ein Gefälle aufweist, um ein Abfließen von Naßmedium zu ermöglichen, welches im Vorbehandlungsbereich 110 zum Reinigen der Fahrzeugkarosserien 124 vor der Oberflächenbehandlung der Karosserien im Tauchbereich 112 der Kabine 100 eingesetzt wird.

Das Dach 139 des Tunnels 104 umfaßt zwei sich parallel zur Durchlaufrichtung 102 erstreckende Flachdachbereiche 140a, 140b und einen zwischen den Flachdachbereichen angeordneten Spitzdachbereich 142.

In den Flachdachbereichen 140a, 140b ist das Dach horizontal ausgerichtet.

Im Spitzdachbereich 142 weist das Dach 139 eine Neigung von 30° gegenüber der Horizontalen auf.

Der Spitzdachbereich 142 weist zwei Teilbereiche 144a, 144b auf, welche bezüglich der Längsmittelebene 146 des Tunnels 104 symmetrisch zueinander ausgebildet und ausgerichtet sind.

Beide Teilbereiche 144a, 144b des Spitzdachbereichs 142 steigen unter einem Winkel von 30° zur Längsmittelebene 146 hin an und stoßen in der Längsmittelebene 146 an einem mittigen First 148 aneinander.

Jeder der Teilbereiche 144a, 144b umfaßt seinerseits einen äußeren Abschnitt 150, der sich von dem First 148 nach unten bis zu der Stelle erstreckt, wo der jeweils zugeordnete Flachdachbereich 140a bzw. 140b an den jeweiligen Teilbereich 144a bzw. 144b anstößt. Dieser äußere Abschnitt 150 des jeweiligen Teilbereichs 144a, 144b bildet einen Teil der Außenkontur des Daches 139.

Ferner umfaßt jeder der Teilbereiche 144a, 144b des Spitzdachbereichs 142 einen inneren Abschnitt 152, welcher sich von der Stelle, an welcher der jeweils zugeordnete Flachdachbereich 140a bzw. 140b an den jeweiligen Teilbereich 144a, 144b des Spitzdachbereichs 142 anstößt, nach unten bis zu einem unteren Rand 154 des jeweiligen Teilbereichs 144a bzw. 144b erstreckt. Dieser innere Abschnitt 152 des jeweiligen Teilbereichs 144a, 144b ragt in den Innenraum 130 des Tunnels 104 hinein und bildet keinen Teil der Außenkontur des Dachs 139.

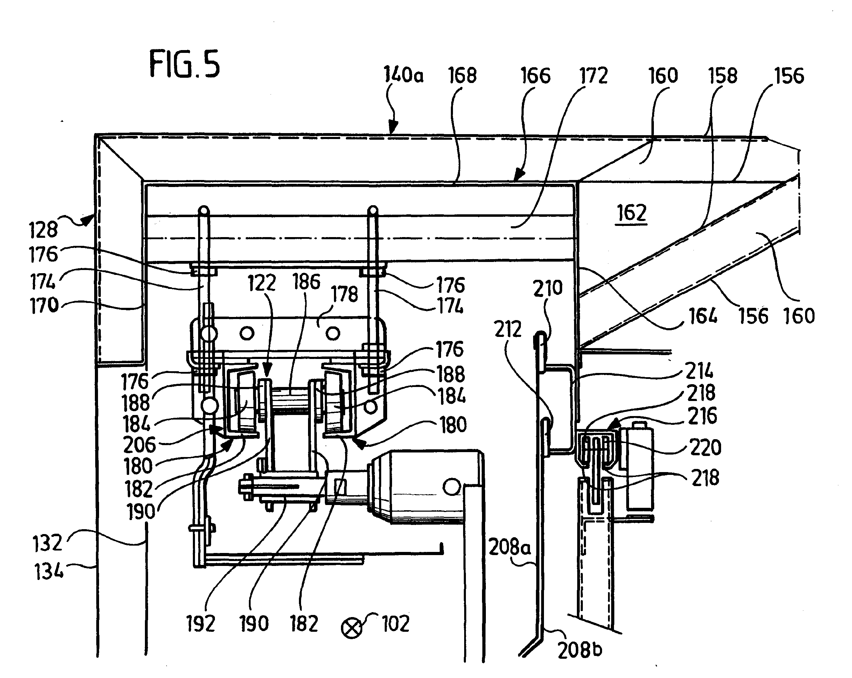

Wie schon bei den Seitenwänden 128 des Tunnels 104, so ist auch bei den verschiedenen Bereichen des Dachs 139 die jeweilige Innenseite durch ein Blechpaneel 156 und die jeweilige Außenseite durch ein Trapezblech 158 gebildet (siehe Fig. 5). Der Zwischenraum zwischen den Blechpaneelen und den Trapezblechen 158 ist durch eine Wärmeisolation 160,die beispielsweise aus Steinwollmatten bestehen kann, ausgefüllt.

Wie aus Fig. 3 zu ersehen ist, ist zwischen der Oberseite jedes der inneren Abschnitte 152 der Teilbereiche 144a, 144b des Spitzdachbereichs 142 einerseits und den Unterseiten der jeweils zugeordneten Flachdachbereiche 140a, 140b andererseits jeweils ein sich längs der Durchlaufrichtung 102 erstreckender, im Querschnitt dreieckiger Zwischenraum 162 ausgebildet, welcher zu dem übrigen Innenraum 130 des Tunnels 104 hin durch einen vertikal ausgerichteten inneren Schenkel 164 eines sich in der Durchlaufrichtung 102 erstreckenden, nach unten geöffneten U-Trageprofils 166 verschlossen ist.

Wie am besten aus Fig. 5 zu ersehen ist, bildet ein horizontaler Steg 168 jedes U-Trageprofils 166 eine Unterseite des jeweiligen Flachdachbereichs 140a bzw. 140b, während ein sich an den Steg 168 anschließender vertikaler äußerer Schenkel 170 des U-Trageprofils 166 einen oberen Rand der Innenseite der jeweiligen Seitenwand 128 bildet.

Ein unterer Rand des äußeren Schenkels 170 ist in horizontaler Richtung nach außen abgekantet und liegt auf einem in entsprechender Weise abgekanteten oberen Rand des Blechpaneels 132 der Seitenwand 128 auf.

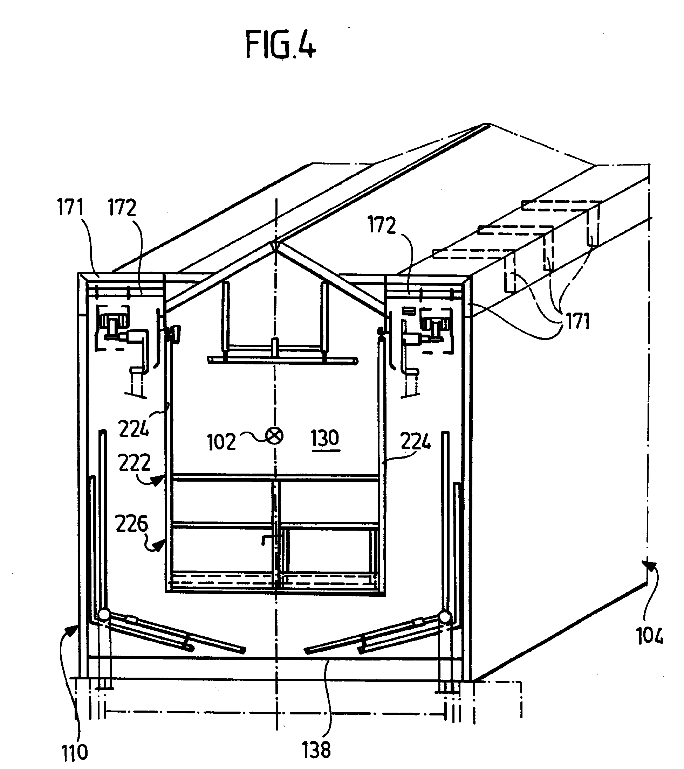

Wie am besten aus Fig. 4 zu ersehen ist, sind an dem horizontalen Steg 168 und an dem äußeren Schenkel 170 jedes U-Trageprofils 166 gewinkelte Verstärkungselemente 171 gehalten, welche sich im Zwischenraum zwischen dem U-Trageprofil 166 und dem Trapezblech 158 quer zur Durchlaufrichtung 102 erstrecken und längs der Durchlaufrichtung 102 voneinander beabstandet sind.

Zwischen dem inneren Schenkel 164 und dem äußeren Schenkel 170 jedes der U-Trageprofile 166 erstrecken sich jeweils eine Mehrzahl von Aufhängungstraversen 172, welche senkrecht zur Durchlaufrichtung 102 ausgerichtet und längs der Durchlaufrichtung 102 voneinander beabstandet sind (siehe Fig. 5).

An jeder der Aufhängungstraversen 172 sind mittels jeweils zweier U-förmig gebogener, die jeweilige Aufhängungstraverse 172 umgreifender Gewindestäbe 174, auf denselben angeordneter Muttern 176 und auf denselben angeordneter Klemmeinrichtungen 177 zwei sich in der Durchlaufrichtung 102 erstreckende Führungs-Profilschienen 180 festgelegt, wobei die beiden Führungs-Profilschienen 180 im wesentlichen U-förmige Querschnitte aufweisen, deren offene Seiten einander zugewandt sind.

Die beiden Führungs-Profilschienen 180 sind mittels Jochen 178, welche im wesentlichen die Form eines nach unten geöffneten U aufweisen, miteinander verbunden, wobei an jeder der einander zugewandten Innenseiten der vertikalen Schenkel jedes Joches 178 jeweils eine der Führungs-Profilschienen 180, vorzugsweise durch Verschweißen, festgelegt ist.

Auf jedem der unteren, im wesentlichen horizontalen Führungsschenkeln 182 der Führungs-Profilschienen 180 rollt jeweils eine Führungsrolle 184 ab, die beide an einander entgegengesetzten Enden eines Verbindungsglieds 186 drehbar gelagert sind.

Jedes der Verbindungsglieder 186 ist starr mit einer Förderkette 122 verbunden, die sich aus längs der Förderkette 122 aufeinanderfolgenden abwechselnd innenliegenden und außenliegenden Kettenlaschen 188 zusammensetzt. Die Kettenlaschen 188 sind jeweils paarweise quer zur Durchlaufrichtung 102 voneinander beabstandet angeordnet. Längs der Durchlaufrichtung 102 aufeinanderfolgende Kettenlaschen sind in einer vertikalen Ebene schwenkbar gelenkig miteinander verbunden, so daß die Förderkette 122 Bögen in dieser vertikalen Ebene beschreiben kann.

An jedem der Verbindungsglieder 186 ist über jeweils zwei Haltestangen 190 jeweils eine Lagerhülse 192 gehalten.

Wie aus Fig. 3 zu ersehen ist, sind in zwei bezüglich der Längsmittelebene 146 des Tunnels 104 symmetrisch zueinander angeordnete Lagerhülsen 192 die beiden Enden eines im wesentlichen U-förmigen Pendels 194 schwenkbar gelagert.

Jedes der Pendel 194 trägt im Bereich seines horizontalen Steges Fixiereinrichtungen 196, durch welche ein (nicht dargestellter) Skidrahmen mit einer darauf angeordneten Fahrzeugkarosserie 124 an dem jeweiligen Pendel 194 festgelegt werden kann.

Jeweils zwei U-förmige Pendel 194 tragen dabei zusammen jeweils einen Skidrahmen mit einer darauf angeordneten Fahrzeugkarosserie 124.

Wie aus Fig. 3 zu ersehen ist, überdeckt der Spitzdachbereich 142 des Dachs 139 des Tunnels 104 die Bahn der Fahrzeugkarosserien 124 durch den Tunnel 104 in deren gesamten Breite.

Um die Fahrzeugkarosserien 124 vor dem Eintreten in den Tauchbereich 112 zu Reinigungszwecken mit einem Naßmedium absprühen zu können, sind im Innenraum 130 des Tunnels 104 in dem Vorbehandlungsbereich 110 untere Sprüheinrichtungen 198 welche die Fahrzeugkarosserien 124 von der Unterseite her mit dem Naßmedium besprühen, seitliche Sprüheinrichtungen 200, welche die Fahrzeugkarosserien 124 von links bzw. von rechts besprühen und an den Innenseiten der Seitenwände 128 festgelegt sind, und obere Sprüheinrichtungen 202, die die Dächer der Fahrzeugkarosserien 124 von oben besprühen und mittels Haltestäben 204 an der Unterseite des Spitzdachbereichs 142 gehalten sind, vorgesehen.

Wird für die Reinigung der Fahrzeugkarosserien 124 ein Naßmedium mit gegenüber der Umgebungstemperatur erhöhter Temperatur (von beispielsweise 60° C) verwendet, so kommt es an der Unterseite des Spitzdachbereichs 142 zu einer Kondensation von Naßmedium, welches aufgrund der Neigung des Spitzdachbereichs 142 jedoch nicht von dem Spitzdachbereich 142 auf die Fahrzeugkarosserien 124 herabtropft, sondern an der Unterseite des jeweiligen Teilbereichs 144a, 144b bis zum jeweiligen unteren Rand 154 entlangrinnt und erst von dem jeweiligen unteren Rand 154 nach unten abtropft. Da der Abstand der unteren Ränder 154 von der Längsmittelebene 146 des Tunnels 104 größer ist als die halbe Breite einer Fahrzeugkarosserie 124, befinden sich in dem Bereich, in welchen das Kondensat von dem Spitzdachbereich 142 abtropft, keine Teile der Fahrzeugkarosserien 124, so daß verhindert wird, daß Kondensattropfen auf die Fahrzeugkarosserien 124 gelangen und später beispielsweise Lackierschäden hervorrufen.

Die durch die jeweils zwei einander zugeordnete Führungs-Profilschienen 180 gebildeten Kettenführungsbahnen 206 sind vor dem mittels der Sprüheinrichtungen 198, 200 und 202 erzeugten Sprühnebel mittels Abdeckblechen 208a, 208b geschützt, welche, in der Durchlaufrichtung 102 aufeinanderfolgend, abwechselnd an einer oberen Halteleiste 210 bzw. an einer unteren Halteleiste 212 eingehängt sind, wobei längs der Durchlaufrichtung 102 aufeinanderfolgende Abdeckbleche 208 einander teilweise überlappen, so daß eine lückenlose Abschirmung der Kettenführungsbahnen 206 vor dem Sprühnebel gewährleistet ist.

Wie aus Fig. 5 zu ersehen ist, sind die oberen Halteleisten 210 jeweils an einem oberen Schenkel eines U-förmigen Halteprofils 214 und die unteren Halteleisten 212 jeweils an einem unteren horizontalen Schenkel des U-förmigen Halteprofils 214 festgelegt, wobei das Halteprofil 214 seinerseits an einem unteren Rand des inneren Schenkels 164 eines der U-Trageprofile 166 gehalten ist.

An dem vertikalen Steg des U-förmigen Halteprofils 214 ist ferner ein sich in der Durchlaufrichtung 102 erstreckendes Führungsprofil 216 mit im wesentlichen C-förmigem Querschnitt festgelegt, welches nach unten geöffnet ist und auf dessen horizontalen unteren Schenkeln 218 die Laufrollen 218 eines (in Fig. 4 dargestellten) Inspektionswagens 222, die mit jeweils einem vertikalen Träger 224 des Inspektionswagens 222 drehbar verbunden sind, abrollen.

Jeweils vier Träger 224 halten einen Korb 226 des Inspektionswagens 222, in welchem eine Bedienungsperson durch den Innenraum 130 des Tunnels 104 gezogen werden kann, um Wartungs- oder Reinigungsarbeiten auszuführen.

In der vorstehend beschriebenen Weise ist der Tunnel 104 sowohl im Vorbehandlungsbereich 110 als auch im Tauchbereich 112 und im Nachbehandlungsbereich 114 ausgebildet.

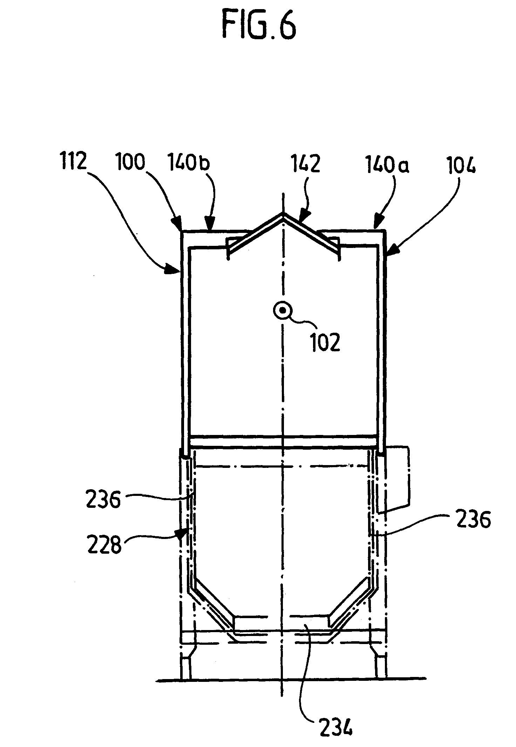

Im Tauchbereich 112 wird der Tunnel 104 jedoch, wie aus den Fig. 1 und 6 zu ersehen ist, nach unten nicht durch eine Bodenwanne begrenzt; vielmehr ist in diesem Bereich unterhalb des Tunnels 104 ein Tauchbecken 228 angeordnet, welches nach vorne bzw. nach hinten durch eine Einlaufschräge 230 bzw. eine Auslaufschräge 232, nach unten durch eine horizontale Bodenwand 234, die vorzugsweise ein Gefälle aufweist, und seitlich durch Seitenwände 236 begrenzt ist.

Das Tauchbecken 228 ist je nach Art der durchzuführenden Oberflächenbehandlung mit einer Vorbehandlungsflüssigkeit oder mit Tauchlack für eine kathodische Elektro-Tauchlackierung gefüllt. Zum Eintauchen in die jeweilige Behandlungsflüssigkeit sind die Kettenführungsbahnen 206 im Tauchbereich 112 abgesenkt, wie aus Fig. 1 zu ersehen ist.

Der vorstehend beschriebene Tunnel 104 weist aufgrund seiner Dachkonstruktion, bei welcher ein Spitzdachbereich 142 zwischen zwei Flachdachbereichen 140a, 140b integriert ist, so daß nicht der gesamte Spitzdachbereich 142, sondern lediglich äußere Abschnitte 150 von Teilbereichen 144a, 144b des Spitzdachbereichs 142 nach oben über die Flachdachbereiche 140a, 140b vorstehen, eine bei gleicher Höhe der zu fördernden Fahrzeugkarosserien 124 um typischerweise 20 % geringere Bauhöhe auf als herkömmliche Tunnel, deren Dach über die gesamte Tunnelbreite als Spitzdach ausgebildet ist.

Die Bauhöhe des Tunnels 104 von der Unterseite der Bodenwanne 138 bis zum First 148 beträgt daher typischerweise nur ungefähr 4,0 m. Aufgrund dieser niedrigen Bauhöhe ist es möglich, komplett vorgefertigte Tunnelabschnitte (sogenannte Schüsse) auf geeigneten Transportfahrzeugen, insbesondere Tiefladern, durch Hallentore von in der Automobilindustrie üblicher Höhe als Ganzes in die Werkhalle zu transportieren, in welcher die Kabine 100 zur Oberflächenbehandlung von Fahrzeugkarosserien installiert werden soll.

Solche Tunnelschüsse weisen beispielsweise eine Länge von jeweils 10,4 m auf und können in komplett vormontiertem Zustand, mit integrierter Bodenwanne 138, Einbauteilen, wie beispielsweise Sprüheinrichtungen, und bereits vormontierter Wärmeisolation 136, 160 zum Montageort angeliefert werden. Bei der Montage müssen dann nur noch aufeinanderfolgende Tunnelschüsse, beispielsweise durch Verschrauben oder Verschweißen, an deren Enden miteinander verbunden werden. Dadurch ergibt sich ein gegenüber herkömmlichen Tunnelkonstruktionen, bei denen die Tunnelabschnitte aufgrund ihrer größeren Bauhöhe nicht als Ganzes durch die Hallentore transportiert werden können und daher vor Ort aus den einzelnen Bestandteilen zusammengesetzt werden müssen, ein deutlich verringerter Montageaufwand.

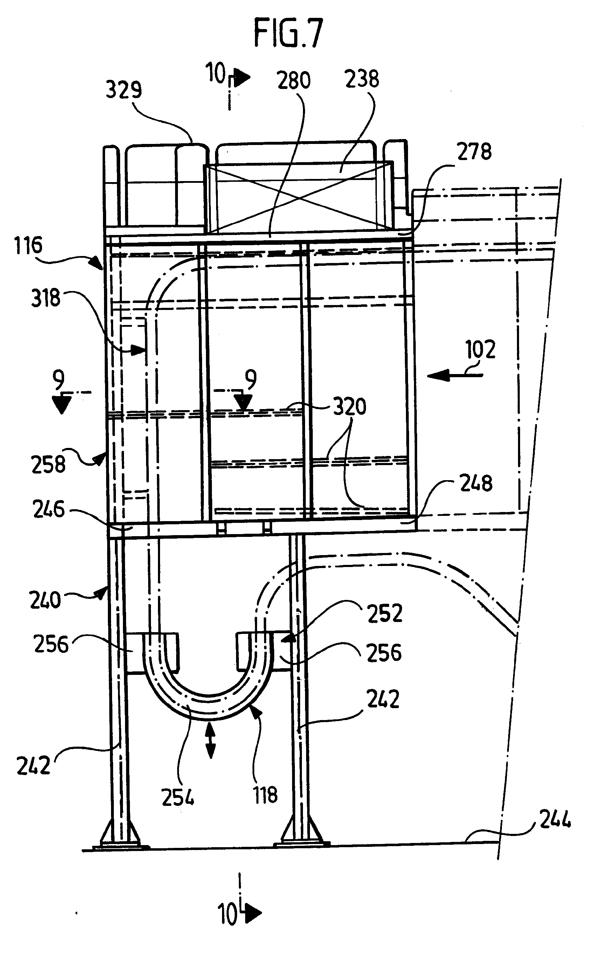

Das Fördermittel 120 der Fördervorrichtung 118 der Kabine 100 wird mittels einer in den Fig. 7, 8 und 10 rein schematisch dargestellten Antriebseinheit 238, welche an den Antriebsturm 116 angeordnet ist, zu einer Umlaufbewegung angetrieben.

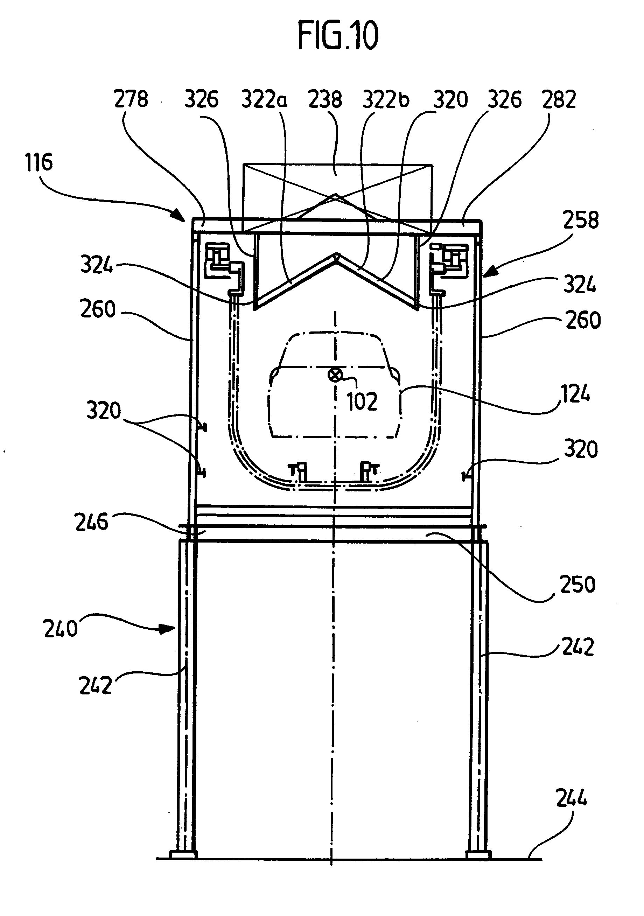

Wie aus den Fig. 7 und 10 zu ersehen ist, umfaßt der Antriebsturm 116 eine Stützkonstruktion 240, welche ihrerseits mehrere, beispielsweise vier vertikale Stützpfeiler 242 umfaßt, die sich an einem Untergrund 244 der Kabine 100 abstützen und an ihren oberen Enden einen horizontalen Basisrahmen 246 tragen, welcher zwei sich parallel zur Durchlaufrichtung 102 erstreckende und senkrecht zur Durchlaufrichtung 102 voneinander beabstandete Längsträger 248 und einen quer zur Durchlaufrichtung 102 sich von dem einen Längsträger 248 zu dem anderen Längsträger 248 erstreckenden Querträger 250 umfaßt.

Die Stützpfeiler 242, die Längsträger 248 und der Querträger 250 werden durch Profilstahlelemente, insbesondere durch Doppel-T-Stahlträger, gebildet.

An den Stützpfeilern 242 der Stützkonstruktion 240 ist eine in Fig. 7 rein schematisch eingetragene Spannvorrichtung 252 gehalten, welche für jeden Strang des Fördermittels 120 einen im wesentlichen U-förmigen Kettenführungsbahn-Abschnitt 254 umfaßt, der unter der Wirkung eines (nicht dargestellten) Spanngewichts in vertikaler Richtung verschieblich an stationären Bereichen 256 der Spannvorrichtung 252 geführt ist, um die Förderketten 122 der Fördervorrichtung 118 unter Spannung zu halten.

Die stationären Bereiche 256 der Spannvorrichtung 252 sind mittels einer (nicht dargestellten) Klemmvorrichtung an den Stützpfeilern 242 der Stützkonstruktion 240 gehalten.

An dem Basisrahmen 246 des Antriebsturms 116 stützt sich ein selbsttragendes Gehäuse 258 ab, welches parallel zur Durchlaufrichtung 102 ausgerichtete Seitenwände 260 und eine quer zur Durchlaufrichtung 102 ausgerichtete, die Seitenwände 260 miteinander verbindende und eine (nicht dargestellte) Austrittsöffnung für die Fahrzeugkarosserien 124 aufweisende Rückwand 262 umfaßt.

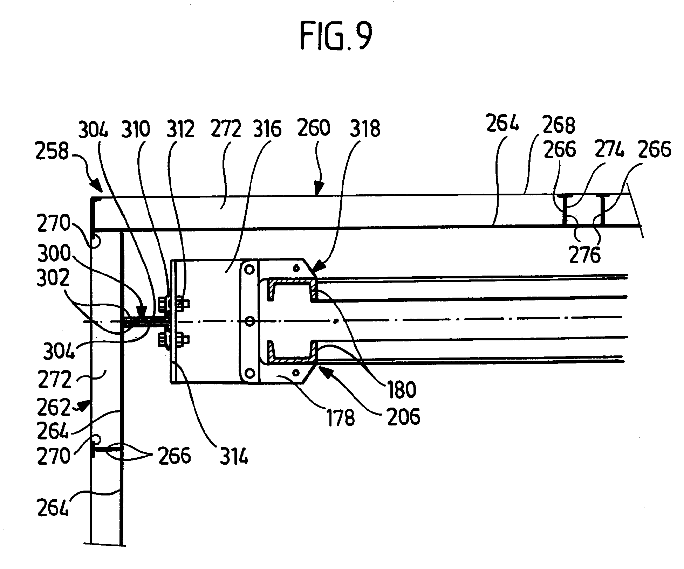

Wie am besten aus der Schnittdarstellung der Fig. 9 zu ersehen ist, ist die Rückwand 262 aus C-förmigen Blechpaneelen 264 gebildet, welche an abgekanteten Bereichen 266 flächig aneinander anliegen und an diesen Bereichen, beispielsweise durch Verschraubung oder Verschweißung, miteinander verbunden sind. Diese Blechpaneele 264 bilden die Innenseite der Rückwand 262.

Die Außenseite der Rückwand 262 ist durch Trapezbleche 268 gebildet, welche an zweiten abgekanteten Bereichen 270 der Blechpaneele 264, beispielsweise durch Verschrauben oder Verschweißen, festgelegt sind.

Der Zwischenraum zwischen den Blechpaneelen 264 und den Trapezblechen 268 kann durch eine beispielsweise aus Steinwollmatten bestehende Wärmeisolation 272 ausgefüllt sein.

Die Seitenwände 260 des Gehäuses 258 sind in ähnlicher Weise wie die Rückwand 262 aus C-förmig abgekanteten Blechpaneelen 264, Trapezblechen 268 und einer dazwischen angeordneten Wärmeisolation 272 ausgebildet; zur Erhöhung der Tragfähigkeit der Seitenwände 260 umfassen dieselben jedoch zusätzlich zwischen jeweils zwei aufeinanderfolgenden Blechpaneelen 264 angeordnete Trageprofile 274, welche ebenfalls einen im wesentlichen C-förmigen Querschnitt aufweisen und durch Abkanten aus einem Metallblech gebildet sind, welches eine größere Materialstärke als das Blech der Blechpaneele 264 aufweist.

Beispielsweise kann zur Herstellung der Blechpaneele drei mm starkes Stahlblech und zur Herstellung der Trageprofile 274 ein 5 mm starkes Stahlblech verwendet werden.

Wie aus Fig. 9 zu ersehen ist, liegen die Trageprofile 274 mit ersten abgekanteten Bereichen 276 an den ersten abgekanteten Bereichen 266 der jeweils angrenzenden Blechpaneele 264 flächig an und sind mit denselben durch Verschrauben oder Verschweißen verbunden.

Die Seitenwände 260 des Gehäuses 258 tragen einen im wesentlichen rechteckigen, horizontalen Halterahmen 278 (siehe Fig. 7 und 10), welcher ebenso wie der Basisrahmen 246 parallel zur Durchlaufrichtung 102 verlaufende Längsträger 280 und quer zur Durchlaufrichtung 102 verlaufende, die beiden Längsträger 280 miteinander verbindende Querträger 282 umfaßt.

Zur lösbaren Festlegung des Halterahmens 278 an der Oberseite des Gehäuses 258 sind die Blechpaneele 264 der Seitenwände 260 an ihren oberen Rändern in horizontaler Richtung abgekantet, um Auflageflächen 284 für den Halterahmen 278 zu bilden.

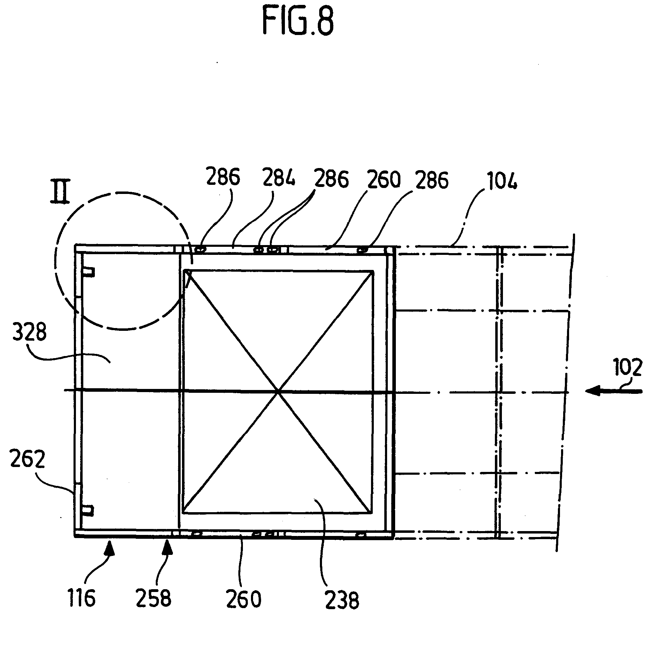

Wie aus Fig. 8 zu ersehen ist, sind diese Auflageflächen 284 mit Langlöchern 286 versehen, die der Aufnahme von Befestigungsmitteln, insbesondere Schrauben, dienen, durch welche der Halterahmen 278 mit dem Gehäuse 258 verbindbar ist. Da diese Befestigungsmittel innerhalb der Langlöcher 286 längs der Durchlaufrichtung 102 verschiebbar sind, ist es möglich, beim Anflanschen des Halterahmens 278 an das Gehäuse 258 den Halterahmen 278 längs der Durchlaufrichtung 102 genau zu justieren und so Fertigungstoleranzen auszugleichen.

An dem Halterahmen 278 ist die in Modulbauweise ausgeführte Antriebseinheit 238 der Fördervorrichtung 118 festgelegt.

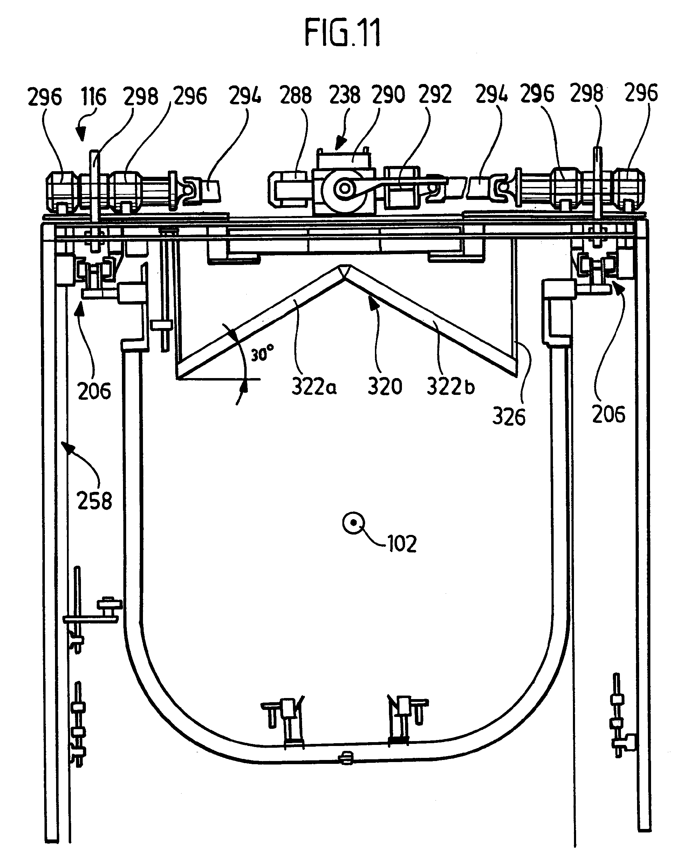

Während die Antriebseinheit 238 in den Fig. 7, 8 und 10 rein schematisch dargestellt ist, zeigt Fig. 11 Einzelheiten einer möglichen Ausführungsform der Antriebseinheit 238.

Die in Fig. 11 dargestellte Antriebseinheit 238 umfaßt einen Getriebemotor 288, ein Zwischengetriebe 290 mit zwei Abtriebswellen 292, welche über zwischengeschaltete Kardangelenkwellen 294 jeweils ein in Stehlagern 296 drehbar gelagertes Caterpillar-Antriebskettenrad 298 antreiben.

Über jedes der Caterpillar-Antriebskettenräder 298 und ein (in der Blickrichtung der Fig. 11 gesehen hinter dem jeweiligen Caterpillar-Antriebskettenrad 298 angeordnetes) Caterpillar-Spannkettenrad ist eine (nicht dargestellte) Caterpillar-Kette gespannt, welche mit jeweils einer der Förderketten 122 der Fördervorrichtung 118 in Eingriff steht, die in unterhalb der Caterpillar-Antriebskettenräder 298 parallel zur Durchlaufrichtung 102 verlaufenden Kettenführungsbahnen 206 geführt sind.

Durch den Eingriff zwischen jeweils einer Caterpillar-Kette und einer der Förderketten 122 wird die von dem Getriebemotor 288 angetriebene Umlaufbewegung der Caterpillar-Kette auf die Förderketten 122 übertragen, so daß auch diese zu einer Umlaufbewegung angetrieben werden.

Sämtliche Bestandteile der Antriebseinheit 238 sind direkt oder indirekt an dem Halterahmen 278 festgelegt, so daß der Halterahmen 278 und die Antriebseinheit 238 zusammen ein fertig vormontierbares Modul bilden, welches komplett montiert an den Montageort der Kabine 100 angeliefert und als Ganzes mittels geeigneter Befestigungsmittel, insbesondere Schrauben, an das selbsttragende Gehäuse 258 des Antriebsturms 116 angeflanscht wird.

Auch das selbsttragende Gehäuse 258 kann mit sämtlichen Einbauten komplett vormontiert und als vormontierte Einheit an den Montageort der Kabine 100 angeliefert werden.

Die Einbauten des Gehäuses 258 umfassen zwei an der Innenseite der Rückwand 262 festgelegte, sich in vertikaler Richtung erstreckende Klemmschienen 300, die aus zwei L-Profilen 302 zusammengesetzt sind, deren lange Schenkel 304 aneinander anliegen (siehe Fig. 9).

An den kurzen Schenkeln der L-Profile 302 sind mittels Klemmschrauben 308, Klemmplatten 310 und Kontermuttern 312 die vertikal ausgerichteten Klemmränder 314 mehrerer in vertikaler Richtung untereinander angeordneter horizontaler Halteplatten 316 festgeklemmt.

Jede der Halteplatten 316 hält eine Aufhängungsklammer 178, an welcher wiederum die beiden zusammen eine Ketten-Führungsbahn 206 bildenden Führungsprofilschienen 180 gehalten sind.

Die Klemmschienen 300 dienen somit der Aufhängung von durch den hinteren Teil des Gehäuses 258 verlaufenden vertikalen Kettenführungsbahn-Abschnitten 318.

Wie aus den Fig. 7 und 10 zu ersehen ist, sind an den Innenseiten der Seitenwände 260 des Gehäuses 258 ferner horizontale Klemmschienen 320 festgelegt, welche der Befestigung weiterer Geräteeinbauten, beispielsweise von Sensoren, dienen und in entsprechender Weise wie die vertikalen Klemmschienen 300 aus jeweils zwei L-Profilen zusammengesetzt sind.

In ihrem in Durchlaufrichtung 102 vorne liegenden Bereich ist das Gehäuse 258 ferner mit einer geneigten Bodenwanne 320 versehen, deren Gefälle entgegen der Durchlaufrichtung 102 gerichtet ist, um von den durch das Gehäuse 258 geförderten Fahrzeugkarosserien 124 abtropfendes Naßmedium in den Tunnel 104 zurückzuleiten.

Ferner ist im Innenraum des Gehäuses 258 oberhalb der Bahn der Fahrzeugkarosserien 124 ein Spitzdach 320 angeordnet, welches zwei symmetrisch zu der Längsmittelebene 146 ausgebildete und angeordnete Teilbereiche 322a, 322b umfaßt, welche jeweils unter einem Winkel von 30° gegen die Horizontale geneigt sind.

An den unteren Rändern 324 der Teilbereiche 322a, 322b des Spitzdachs 320 sind jeweils Haltestangen 326 festgelegt, mittels welcher das Spitzdach 320 an der Antriebseinheit 238 gehalten ist.

An dem Spitzdach 320 kondensiert Naßmedium, welches von den Fahrzeugkarosserien 124 in Dampfform aus dem Tunnel 104 in das Gehäuse 258 des Antriebsturms 116 eingetragen wird. Aufgrund der Neigung des Spitzdachs 320 tropft dieses kondensierte Naßmedium nicht von oben auf die durch das Gehäuse 258 geförderten Fahrzeugkarosserien 124 herab, sondern rinnt an dessen Unterseite bis zu den unteren Rändern 324 der Teilbereiche 322a, 322b, von wo das Kondensat seitlich neben den Fahrzeugkarosserien 124 herabtropft, so daß kein Kondensat auf die Fahrzeugkarosserien gelangt, wo es zu Lackschäden führen könnte.

Ferner ist das Gehäuse 258 mit einer Deckenwand 327 in Form eines horizontalen Deckenblechs versehen, welches von den Seitenwänden 260 und der Rückwand 262 getragen wird und durch eine Bedienungsperson begehbar ist, um die Antriebseinheit 238 zu überprüfen und zu warten. Der Sicherheit einer die Deckenwand 327 begehenden Bedienungsperson dienen Geländer 329, welche längs der Ränder der Deckenwand 327 angeordnet sind.

Wie am besten aus Fig. 8 zu ersehen ist, entsprechen sowohl die Gesamtbreite des selbsttragenden Gehäuses 258 als auch dessen lichte Weite (d.h., der Abstand zwischen den Seitenwänden 260) genau der Gesamtbreite bzw. der lichten Weite des in der Durchlaufrichtung 102 vor dem Antriebsturm 116 angeordneten Abschnitts des Tunnels 104.

An den Stellen, an welchen die Seitenwände des Tunnels 104 einerseits und des Gehäuses 258 andererseits aneinanderstoßen, können der Tunnel 104 und das Gehäuse 258 daher in einfacher Weise durch eine Schraub- oder Schweißverbindung miteinander verbunden werden.

Dabei fluchten die Seitenwände des Tunnels 104 und des Gehäuses 258 miteinander, so daß eine durchgehende glatte Außenfläche entsteht, welche einfach zu reinigen ist.

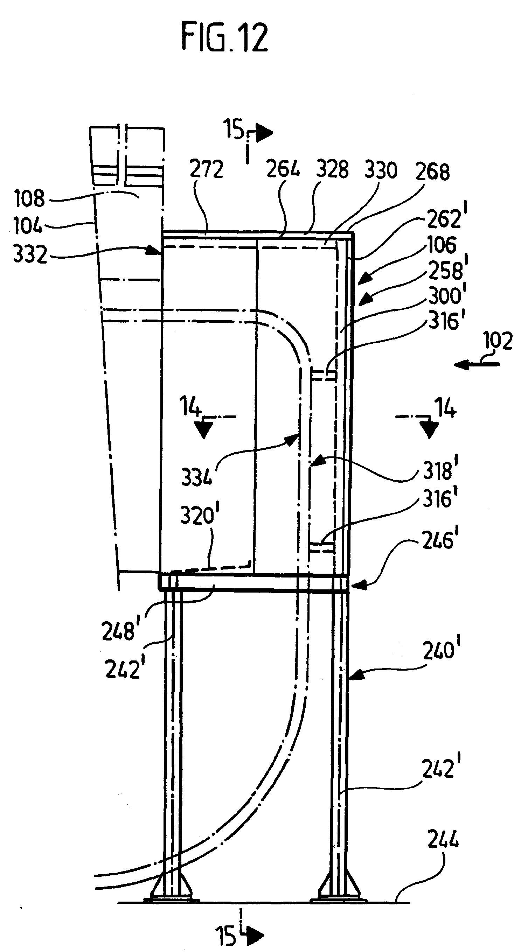

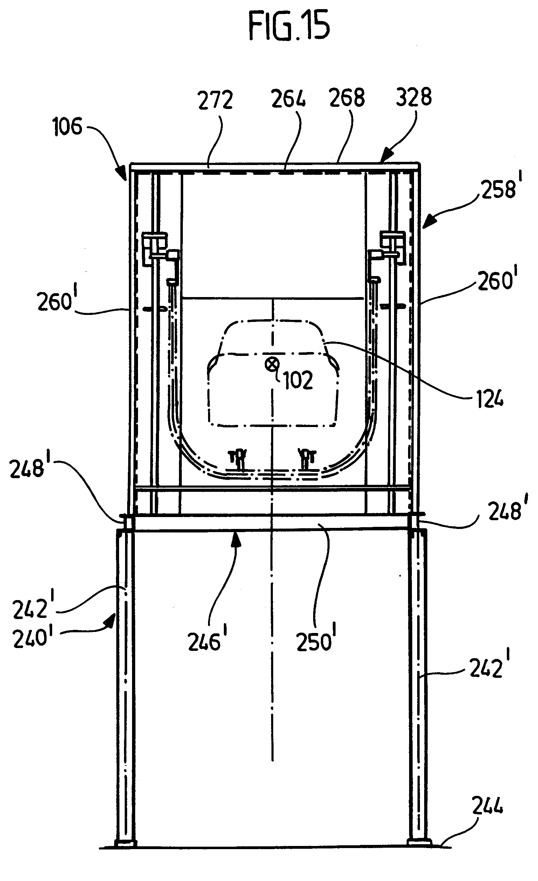

Wie aus den Fig. 12 und 15 zu ersehen ist, umfaßt auch der eingangsseitige Umlenkturm 106 der Kabine 100 eine Stützkonstruktion 240', welche ihrerseits mehrere, beispielsweise vier vertikale Stützpfeiler 242' umfaßt, die sich an dem Untergrund 244 der Kabine 100 abstützen und an ihren oberen Enden einen horizontalen Basisrahmen 246' tragen, welcher zwei sich parallel zur Durchlaufrichtung 102 erstreckende und senkrecht zur Durchlaufrichtung 102 voneinander beabstandete Längsträger 248' und einen quer zur Durchlaufrichtung 102 sich von dem einen Längsträger 248' zu dem anderen Längsträger 248' erstreckenden Querträger 250' umfaßt.

Die Stützpfeiler 242', die Längsträger 248' und der Querträger 250' werden durch Profilstahlelemente, insbesondere durch Doppel-T-Stahlträger, gebildet.

An dem Basisrahmen 246' des Umlenkturms 106 stützt sich ein selbsttragendes Gehäuse 258' ab, welches parallel zur Durchlaufrichtung 102 ausgerichtete Seitenwände 260' und eine quer zur Durchlaufrichtung 102 ausgerichtete, die Seitenwände 260' miteinander verbindende und eine (nicht dargestellte) Eintrittsöffnung für die Fahrzeugkarosserien 124 aufweisende Vorderwand 262' umfaßt.

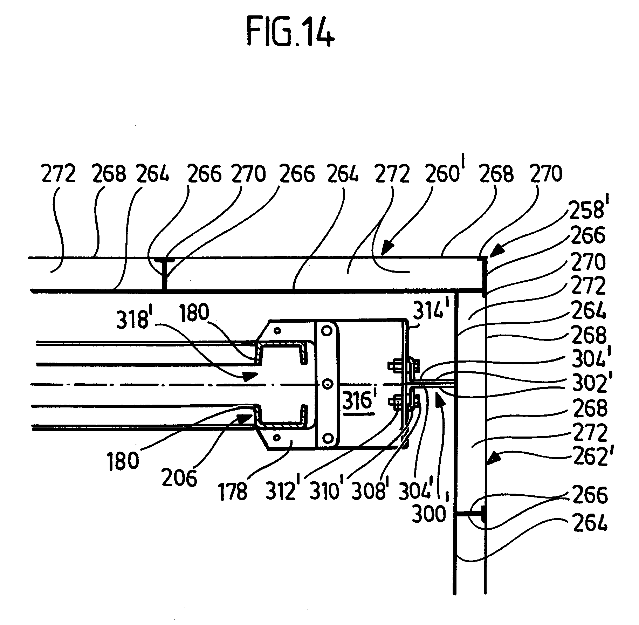

Wie am besten aus der Schnittdarstellung der Fig. 14 zu ersehen ist, sind die Vorderwand 262' und die Seitenwände 260' aus C-förmigen Blechpaneelen 264 gebildet, welche an ersten abgekanteten Bereichen 266 flächig aneinander anliegen und an diesen Bereichen, beispielsweise durch Verschraubung oder Verschweißung, miteinander verbunden sind. Diese Blechpaneele 264 bilden die Innenseiten der Vorderwand 262' und der Seitenwände 260'.

Die Außenseiten der Vorderwand 262' und der Seitenwände 260' sind durch Trapezbleche 268 gebildet, welche an zweiten abgekanteten Bereichen 270 der Blechpaneele 264, beispielsweise durch Verschrauben oder Verschweißen, festgelegt sind.

Die Zwischenräume zwischen den Blechpaneelen 264 und den Trapezblechen 268 sind durch eine beispielsweise aus Steinwollmatten bestehende Wärmeisolation 272 ausgefüllt.

Zur Herstellung der Blechpaneele 264 kann beispielsweise 3 mm starkes Stahlblech verwendet werden.

Die Seitenwände 260' und die Vorderwand 262' des Gehäuses 258' tragen eine horizontale Deckenwand 328, deren Unterseite aus C-förmig abgekanteten Blechpaneelen 264 und deren Oberseite durch Trapezbleche 268 gebildet ist. Auch die Zwischenräume zwischen den Blechpaneelen 264 und den Trapezblechen 268 der Deckenwand 328 sind mit einer Wärmeisolation 272 ausgefüllt.

Zur Erhöhung der Steifigkeit der Deckenwand 328 sind an der Unterseite derselben sich parallel zur Durchlaufrichtung 102 erstreckende Verstärkungsprofile 330 (siehe Fig. 12) mit T-förmigem Querschnitt festgelegt.

Die Einbauten des selbsttragenden Gehäuses 258' umfassen zwei an der Innenseite der Vorderwand 262' festgelegte, sich in vertikaler Richtung erstreckende Klemmschienen 300', die aus zwei L-Profilen 302' zusammengesetzt sind, deren lange Schenkel 304' aneinander anliegen.

An den kurzen Schenkeln der L-Profile 302' sind mittels Klemmschrauben 308', Klemmplatten 310' und Kontermuttern 312' die vertikal ausgerichteten Klemmränder 314' mehrerer in vertikaler Richtung untereinander angeordneter horizontaler Halteplatten 316' festgeklemmt.

Jede der Halteplatten 316' hält eine Aufhängungsklammer 178, an welcher wiederum die beiden zusammen eine Ketten-Führungsbahn 206 bildenden Führungsprofilschienen 180 gehalten sind.

Die Klemmschienen 300' dienen somit der Aufhängung von durch den vorderen Teil des Gehäuses 258' verlaufenden vertikalen Kettenführungsbahn-Abschnitten 318'.

In seinem in Durchlaufrichtung 102 hinten liegenden Bereich ist das Gehäuse 258' ferner mit einer geneigten Bodenwanne 320' versehen, deren Gefälle parallel zur Durchlaufrichtung 102 gerichtet ist, um von den durch das Gehäuse 258' geförderten Fahrzeugkarosserien 124 abtropfendes Naßmedium in den Tunnel 104 abzuleiten.

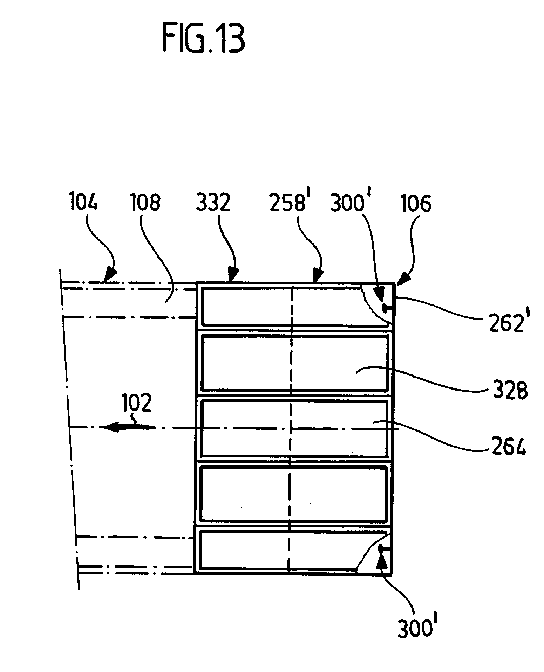

Wie am besten aus Fig. 13 zu ersehen ist, entsprechen sowohl die Gesamtbreite des selbsttragenden Gehäuses 258' als auch dessen lichte Weite (das heißt der Abstand zwischen den Seitenwänden 260') genau der Gesamtbreite bzw. der lichten Weite des in der Durchlaufrichtung 102 nach dem Umlenkturm 106 angeordneten Abschnitts des Tunnels 104, nämlich der Luftschleuse 108.

An den Stellen, an welchen die Seitenwände des Tunnels 104 einerseits und des Gehäuses 258' andererseits aneinanderstoßen, können der Tunnel 104 und das Gehäuse 258' daher in einfacher Weise durch eine Schraub- oder Schweißverbindung miteinander verbunden werden.

Dabei fluchten die Seitenwände des Tunnels 104 und des Gehäuses 258' miteinander, so daß eine durchgehende glatte Außenfläche entsteht, welche einfach zu reinigen ist.

Die Seitenwände 260' und die Deckenwand 328 des selbsttragenden Gehäuses 258' bilden zusammen eine Absaughaube 332 für die unmittelbar im Anschluß an das selbsttragende Gehäuse 258' angeordnete Luftschleuse 108. Auf das Vorsehen einer zusätzlichen, separaten Absaughaube für die Luftschleuse 108 kann daher verzichtet werden.

Die vertikalen Kettenführungsbahn-Abschnitte 318' bilden zusammen mit vor- und nachgeordneten gekrümmten Kettenführungsbahn-Abschnitten eine Umlenkeinheit 334. der Fördervorrichtung 118, welche an dem selbsttragenden Gehäuse 258' des Umlenkturms 106 gehalten ist.

## Patentansprüche

1. Kabine zur Oberflächenbehandlung von Fahrzeugkarosserien, umfassend
einen Tunnel (104),
eine Fördervorrichtung (118) zum Fördern der Fahrzeugkarosserien (124) durch den Tunnel (104) hindurch, welche eine Antriebseinheit (238) und eine Umlenkeinheit (334) für ein Fördermittel (120) der Fördervorrichtung (118) umfaßt,
einen Antriebsturm (116), an welchem die Antriebseinheit (238) gehalten ist, und
einen Umlenkturm (106), an welchem die Umlenkeinheit (334) gehalten ist,
**dadurch gekennzeichnet,** daß
der Antriebsturm (116) und/oder der Umlenkturm (106) jeweils ein selbsttragendes Gehäuse (258; 258') umfassen, an welchem die Antriebseinheit (238) bzw. die Umlenkeinheit (334) der Fördervorrichtung (118) gehalten ist.

2. Kabine nach Anspruch 1, dadurch gekennzeichnet, daß das Gehäuse (258, 258') im wesentlichen dieselbe Gesamtbreite wie der Tunnel (104) aufweist.

3. Kabine nach einem der Ansprüche 1 oder 2, dadurch gekennzeichnet, daß das Gehäuse (258, 258') im wesentlichen dieselbe lichte Weite wie der Tunnel (104) aufweist.

4. Kabine nach einem der Ansprüche 1 bis 3, dadurch gekennzeichnet, daß sich das Gehäuse (258, 258') unmittelbar an den Tunnel (104) anschließt.

5. Kabine nach einem der Ansprüche 1 bis 4, dadurch gekennzeichnet, daß das Gehäuse (258, 258') mit dem Tunnel (104) verschweißt ist.

6. Kabine nach einem der Ansprüche 1 bis 5, dadurch gekennzeichnet, daß das Gehäuse (258, 258') von einer Stützkonstruktion (240, 240') aus vertikalen Stützpfeilern (242, 242') getragen ist.

7. Kabine nach Anspruch 6, dadurch gekennzeichnet, daß die Stützpfeiler (242, 242') als Profilstahlelemente, vorzugsweise als Profilstahlelemente mit Doppel-T-Querschnitt, ausgebildet sind.

8. Kabine nach einem der Ansprüche 6 oder 7, dadurch gekennzeichnet, daß die Stützkonstruktion (240, 240') einen im wesentlichen horizontalen Basisrahmen (246, 246') umfaßt, welcher das Gehäuse (258, 258') trägt.

9. Kabine nach einem der Ansprüche 1 bis 8, dadurch gekennzeichnet, daß das Gehäuse (258, 258') eine integrierte Bodenwanne (320, 320') umfaßt.

10. Kabine nach einem der Ansprüche 1 bis 9, dadurch gekennzeichnet, daß das Gehäuse (258, 258') Seitenwände (260, 260') umfaßt, welche Blechpaneele (264, 264') umfassen.

11. Kabine nach Anspruch 10, dadurch gekennzeichnet, daß die Seitenwände (260) Trageprofile (274) umfassen, welche eine größere Materialstärke als die Blechpaneele (264) aufweisen.

12. Kabine nach Anspruch 11, dadurch gekennzeichnet, daß die Trageprofile (274) im wesentlichen vertikal ausgerichtet sind.

13. Kabine nach einem der Ansprüche 1 bis 12, dadurch gekennzeichnet, daß an der Innenseite des Gehäuses (258, 258') mindestens eine Klemmschiene (300, 300') zum Anklemmen eines Fördermittelführungsbahnabschnittes (318, 318') festgelegt ist.

14. Kabine nach einem der Ansprüche 1 bis 13, dadurch gekennzeichnet, daß an der Innenseite des Gehäuses (258, 258') mindestens ein Verstärkungsprofil (330) zum Versteifen des Gehäuses (258') angeordnet ist.

15. Kabine nach einem der Ansprüche 1 bis 14, dadurch gekennzeichnet, daß die Begrenzungswände (260, 260', 262, 262', 328) des Gehäuses (258, 258') mit einer Wärmeisolation (272, 272') versehen sind.

16. Kabine nach einem der Ansprüche 1 bis 15, dadurch gekennzeichnet, daß an der Innenseite des Gehäuses (258) mindestens eine Klemmschiene (320) zum Anklemmen von Einbauten, insbesondere von Sensoren, angeordnet ist.

17. Kabine nach einem der Ansprüche 1 bis 16, dadurch gekennzeichnet, daß das Gehäuse (258) die Antriebseinheit (238) der Fördervorrichtung (118) trägt.

18. Kabine nach Anspruch 17, dadurch gekennzeichnet, daß die Antriebseinheit (238) einen Halterahmen (278) umfaßt, welcher von dem Gehäuse (258) getragen ist und an welchem alle übrigen Bestandteile der Antriebseinheit (238) mittelbar oder unmittelbar gehalten sind.

19. Kabine nach Anspruch 18, dadurch gekennzeichnet, daß der Halterahmen (278), vorzugsweise mittels einer Schraubverbindung, lösbar an dem Gehäuse (258) festgelegt ist.

20. Kabine nach einem der Ansprüche 1 bis 19, dadurch gekennzeichnet, daß das Gehäuse (258) eine begehbare Deckenwand (327) umfaßt.

21. Kabine nach einem der Ansprüche 1 bis 20, dadurch gekennzeichnet, daß Seitenwände (260) und eine Deckenwand (328) des Gehäuses (258') zusammen eine Absaughaube (332) für eine sich an das Gehäuse (258') anschließende Luftschleuse (108) bilden.
